# EUROPÄISCHE PATENTSCHRIFT

(11) **EP 0 393 337 B1**
(45) Veröffentlichungstag und Bekanntmachung des Hinweises auf die Patenterteilung: **01.06.1994**
(21) Anmeldenummer: 90104104.6
(22) Anmeldetag: 02.03.1990
(51) Int. Cl.: A01B 33/14

(54) **Bodenbearbeitungswerkzeug**
Groundworking tool
Outil pour le travail du sol

(30) Priorität: 21.04.1989 DE 8905025 U
(43) Veröffentlichungstag der Anmeldung: 24.10.1990
(73) Patentinhaber: H. Niemeyer Söhne GmbH & Co. KG, D-48466 Hörstel (DE)
(72) Erfinder: Barlage, Bruno, D-4446 Hörstel (DE); Robert, Franz-Josef, D-4446 Hörstel (DE)

(56) Entgegenhaltungen:
- EP-A- 0 223 595
- DE-C- 311 701
- DE-C- 538 033
- DE-U- 8 532 161
- FR-A- 865 988
- FR-A- 2 208 589
- FR-A- 2 330 295
- US-A- 2 054 129

## Beschreibung

Die Erfindung bezieht sich auf eine Bodenbearbeitungsmaschine in einer Ausbildung gemäß dem Oberbegriff des Anspruchs 1.

Bei bekannten Maschinen dieser Art (EP-A-0 152 892, EP-A-0 293 675, DE-U-87 07 829) bestehen die Halteteile aus Platten, an denen die Werkzeuge mit ihrem Befestigungsteil durch gesonderte Verbindungselemente festgelegt sind. Die Verbindungselemente können dabei von Schrauben und/oder von einer Sollbruchstelle definierenden Verbindungsbolzen gebildet sein. Bei einer weiterhin bekannten Maschine (DE-U-85 32 161) ist das Halteteil als Haltearm mit einer Aufnahmehülse ausgebildet, in die der zylindrisch ausgeführte Verbindungsteil aufgenommen wird. Der Verbindungsteil ist an seinem dem Arbeitsteil des Werkzeugs abgewandten Stirnende mit einem koaxialen Gewindezapfen versehen, der eine Bohrung am rückwärtigen Ende der Aufnahmehülse durchgreift und zur Festlegung des Werkzeugs mittels einer außenliegenden Spannmutter dient. Bei sämtlichen Ausführungen bedarf das Anbringen der Werkzeuge gesonderter Verbindungsteile, die mittels Hilfswerkzeugen anzubringen sind.

Aus der FR-A-865 988 ist eine Werkzeugbefestigung für eine Bodenfräse bekannt, bei der das Werkzeug lösbar über eine spiralförmige Doppelfeder mit der Antriebswelle des Gerätes verbunden ist. Durch die gefederte Aufhängung ist das Werkzeug bei der Arbeit quer zur Fahrtrichtung instabil, was die Arbeitsqualität beeinträchtigt. Ferner ist nachteilig, daß zur Befestigung des Werkzeugs Zusatzteile wie Bolzen, Ringe oder dergleichen benötigt werden, wodurch das Auswechseln des Werkzeugs erschwert wird.

Der Erfindung liegt die Aufgabe zugrunde, eine Bodenbearbeitungsmaschine mit einer Werkzeugbefestigung zu schaffen, die einen schnellen, einfachen und von Hilfswerkzeugen freien An- und Abbau der Werkzeuge ermöglicht und dabei den Werkzeugen einen sicheren Halt an ihren Halteteilen vermittelt.

Diese Aufgabe löst die Erfindung durch eine Bodenbearbeitungsmaschine mit den Merkmalen des Anspruchs 1. Hinsichtlich wesentlicher weiterer Ausgestaltungen wird auf die Ansprüche 2 bis 16 verwiesen.

Bei der erfindungsgemäßen Bodenbearbeitungsmaschine wird das Werkzeug, im allgemeinen ein im wesentlichen gerader, langgestreckter Zinken, mit seinem Befestigungsteil einfach in die Tasche eingeführt, mit seinem Haken auf den Querzapfen in der Tasche aufgesetzt und durch eine Verschwenkbewegung in die Betriebsstellung überführt, in der das Werkzeug durch eine Rastarretierung fixiert ist. Zum Abnehmen des Werkzeugs wird dieses zurückverschwenkt und ausgehängt. Zur Überwindung der Rastarretierung genügt dabei jeweils ein kräftiger Schlag, für den kein besonderes Hilfswerkzeug erforderlich ist.

Weitere Einzelheiten und Vorteile ergeben sich aus der nachfolgenden Beschreibung und der Zeichnung, in der zwei Ausführungsbeispiele des Gegenstands der Erfindung näher veranschaulicht sind. In der Zeichnung zeigen:
- Fig. 1: eine Seitenansicht einer Zinkenbefestigung einer Bodenbearbeitungsmaschine nach der Erfindung, teilweise im Schnitt,
- Fig. 2: einen Schnitt nach der Linie II-II in Fig. 1,
- Fig. 3: eine Ansicht ähnlich Fig. 1 einer zweiten Ausführung der Messerbefestigung einer Bodenbearbeitungsmaschine nach der Erfindung,
- Fig. 4: einen Schnitt nach der Linie IV-IV in Fig. 3, und
- Fig. 5: einen Schnitt nach der Linie V-V in Fig. 3.

Die in der Zeichnung lediglich mit den für die vorliegende Erfindung wesentlichen Teilen veranschaulichte Bodenbearbeitungsmaschine umfaßt im einzelnen eine an einem nicht dargestellten Maschinengestell um eine Achse (1) drehbar gelagerte, im Bodenbearbeitungsbetrieb angetriebene Welle (2), die üblicherweise mit einer Vielzahl von Werkzeugen (3) bestückt ist, von denen lediglich ein einzelnes näher veranschaulicht ist. Die Ausbildung der Werkzeuge (3), ihre Ausrichtung zur Welle (2) sowie die Anzahl und die Verteilung der Werkzeuge auf der Welle hängen von der Art der Bodenbearbeitung ab und sind in vielfältigen Ausführungsformen bekannt. Die Werkzeuge (3) haben beispielsweise wie dargestellt die Form eines langgestreckten, im wesentlichen geraden Zinkens oder die Form von Mulch- oder Fräsmessern oder für sonstige Arbeiten wie Hackarbeiten geeignete Formen.

Bei dem als Werkzeug (3) dargestellten geraden Zinken ist der Arbeitsteil (4) auf seiner in die Drehrichtung (5) weisenden Seite keilförmig ausgebildet, rückseitig mit einer längslaufenden Ausnehmung (6) versehen und am freien Ende mit einem Schrägabschnitt (7) ausgebildet, durch den eine Art Freischneidwinkel gebildet wird. Der Arbeitsteil (4) geht in einen Befestigungsteil (8) über, und der Übergangsbereich (9) kann bei Bedarf als Sollbruchstelle ausgebildet sein, wenn zusätzlich zu oder anstelle von einer Überlastsicherung für die Welle (2) eine Überlastsicherung für die Einzelwerkzeuge gewünscht ist.

Zur Festlegung des Werkzeugs (3) auf der Welle (2) ist letztere mit einem gesonderten Halteteil (10) je Werkzeug (3) versehen, das als eine den Befestigungsteil (8) des Werkzeugs (3) aufnehmende, im wesentlichen U-förmige und an Endbereichen ihrer Seitenschenkel (11,12) an der Welle (2) angeschweißte Tasche ausgebildet ist. Der Querschenkel (13) der U-förmigen Tasche (10) bietet innenseitig eine Anschlagfläche (14) dar, die in Eingriff mit einer Widerlagerfläche (14′) am Befestigungsteil (8) des Werkzeugs (3) dessen Betriebsstellung definiert. Die Tasche (10) umfaßt einen Querzapfen (15), der die Seitenschenkel (11, 12) der Tasche (10) durchgreift und mit deren Außenseite verschweißt ist.

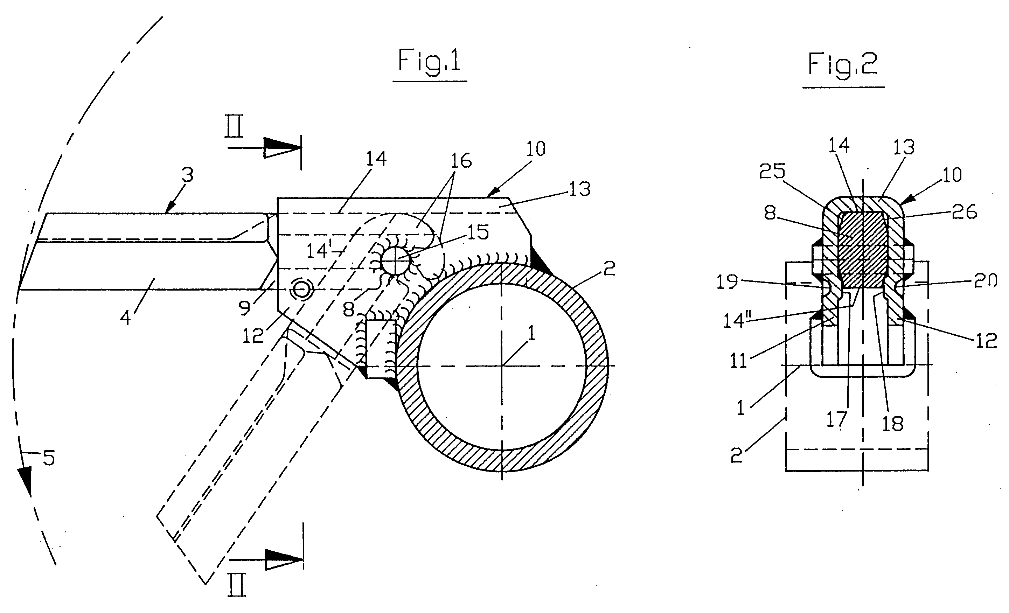

Das wellenseitige Ende des Befestigungsteils (8) des Werkzeugs (3) ist als auf den Querzapfen (15) aufsetz- bzw. aufhängbarer Haken (16) ausgebildet, der in Betriebsstellung des Werkzeugs (3) den Querzapfen (15) auf seiner der Welle (2) abgewandten Seite mit einem annähernd 180° betragenden Umstreckungswinkel umgreift und das Werkzeug (3) gegen Verlagerungen in dessen Längsrichtung sichert. Der Haken (16) ist in einer in Fig. 1 in gestrichelten Linen veranschaulichten Ansatzstellung auf den Querzapfen (15) aufsetzbar und in dieser auch von diesem abnehmbar, wobei in der Ansatzstellung das Werkzeug (3) eine gegenüber der in Fig. 1 und 3 ausgezogenen Linien veranschaulichten Betriebsstellung eine entgegen der Betriebsdrehrichtung (5) der Welle (2) voreilend verschwenkte Ausrichtung aufweist. Der Schwenkwinkel zwischen der Ansatz- und der Betriebsstellung des Werkzeugs (3) kann dabei den Betrag von etwa 30° bis 60° haben.

Zwischen den Seitenschenkeln (11,12) der Tasche (10) und dem Befestigungsteil (8) des Werkzeugs (3) ist eine Rastarretierung vorgesehen, die das Werkzeug (3) im Zusammenwirken mit den übrigen in Eingriff befindlichen Teilen der Werkzeugbefestigung in seiner Betriebsstellung fixiert. Die Rastarretierung bei der Ausführung nach Fig. 1 wird von in Querrichtung zum Werkzeug (3) vorspringenden Rastvorsprünge (17,18) und diesen in Betriebsstellung des Werkzeugs (3) gegenüberliegenden, in Querrichtung zurückspringenden Rastausnehmungen (19,20) gebildet, die in Betriebsstellung des Werkzeugs (3) paarweise in Rasteingriff stehen. Die Rastvorsprünge (17,18) sind an dem Befestigungsteil (8) zugewandten Innenseiten der Seitenschenkel (11,12) der Tasche (10) angeordnet, wobei sie bei dem Beispiel nach Fig. 1 als durch Prägen gebildeten Sicken ausgebildet sind. Statt dessen können sie auch von angeformten Vorsprüngen, z.B. bei Halteteilen (10) aus Guß, oder von angesetzten Rastgliedern wie den Enden von Schraubenbolzen, von Nietköpfen oder dgl. oder auch von Bohrlöchern gebildet sein. Im letzteren Falle besteht die Möglichkeit ihrer Anbringung vor Anschweißen der Tasche (10) an der Welle (2).

Die Rastvorsprünge (17,18) greifen bei dem Beispiel nach Fig. 1 und 2 in Rastausnehmungen (19,20), die in Längsrichtung des Werkzeugs (3) verlaufenden Abschrägungen von Seitenflächenbereichen entlang der der Widerlagerfläche (14') abgewandten Vorderfläche (14'') des Befestigungsteils (8) gebildet sind. Anstelle dieser bevorzugten Ausbildung der Rastausnehmungen (19,20), können die Rastausnehmungen auch von im Umriß an die Rastvorsprünge angepaßten Einsenkungen gebildet sein. Die dargestellte Ausbildung der Rastausnehmungen (19,20) hat jedoch den Vorteil, daß sie zugleich Auflauframpen bilden, die bei der Überführung eines Werkzeugs (3) aus der Betriebsstellung in die Ansetzstellung in Funktion treten und das Überwinden der Rastarretierung erleichtern. Eine derartige Erleichterung ist allerdings auch dadurch möglich, daß die Rastvorsprünge (17,18) und/oder die Rastausnehmungen (19,20) jeweils randseitige Abschrägungen als Auflauframpen aufweisen, die sich beispielsweise bei von Sicken gebildeten Rastausnehmungen durch den Prägevorgang praktisch von selbst ergeben.

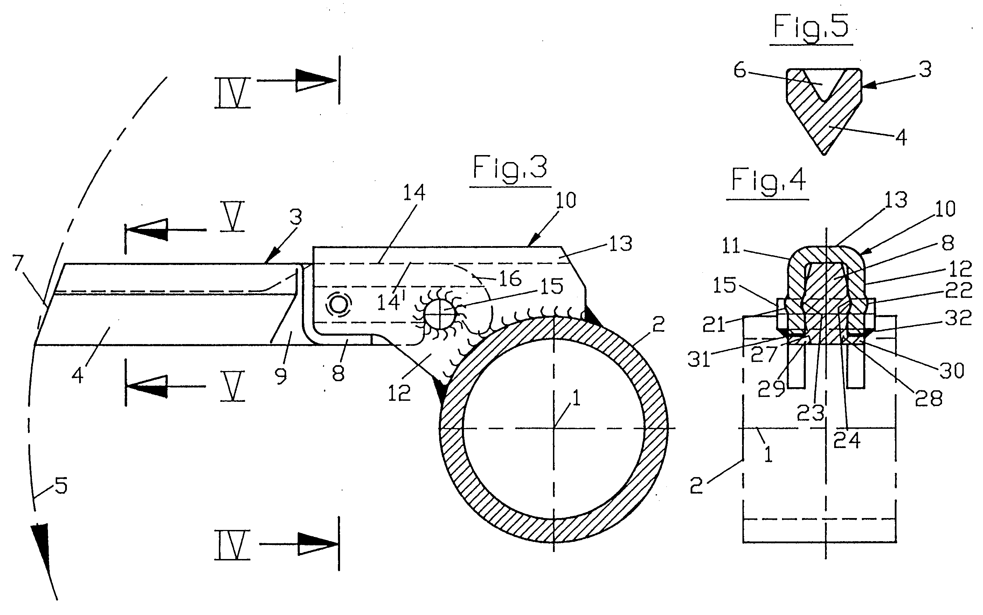

Im Unterschied zur Ausführung der Rastarretierung beim Ausführungsbeispiel nach Fig. 1 und 2 wird die Rastarretierung beim Ausführungsbeispiel nach Fig. 3 und 4 von Rastausnehmungen (21,22) an den Innenseiten der Seitenschenkel (11,12) der Tasche (10) und von Rastvorsprüngen (23,24) an den Seitenflächen des Befestigungsteils (8) des Werkzeugs (3) gebildet. Dies hat den Vorteil, daß bei einem Erneuern des Werkzeugs (3) aus Gründen allgemeinen Verschleisses auch die Rastvorsprünge (23,24) mit ausgewechselt werden, so daß an den Rastvorsprüngen auftretender Verschleiß mitbehoben wird.

Die Seitenschenkel (11,12) der Tasche (10) sind im Bereich der Rastarretierungsstellen vorteilhaft federelastisch ausweichbar und nehmen in Rastarretierungsstellung des Werkzeugs (3) vorzugsweise eine federeleastisch voneinander abgespreizte Klemmstellung ein mit der Folge, daß die Vorsprünge und Ausnehmungen der Rastarretierung in der Betriebsstellung des Werkzeugs (3) unter Vorspannung in wechselseitigem Eingriff stehen und so eine unerwünschte Werkzeuglose vermieden ist. Gleichzeitig ergibt sich aus dieser Vorspannung eine Nachstellwirkung. Dies wird besonders begünstigt, wenn neben der Verwendung von federelastischen Materialien für die Wandung der Tasche (10) die Rastarretierungsstellen einen möglichst großen Abstand vom Querschenkel (13) der Tasche (10) und/oder von dem in der Tasche (10) angeordneten Querzapfen (15) haben, so daß sich ein möglichst großer freier Federweg ergibt. Dies gilt für beide Ausführungen nach Fig. 1, 2 und Fig. 3, 4, wobei zu letzterer noch anzumerken ist, daß die Rastausnehmungen (21,22) von durch Prägen gebildeten, annähernd kreisförmigen Einsenkungen gebildet sind, und die Rastvorsprünge von an die Seitenflächen des Befestigungsteils (8) des Werkzeugs (3) angeformten, z.B. angeschmiedeten Vorsprünge gebildet sind, deren Umriß an den der Einsenkungen angepaßt ist.

Der Befestigungsteil (8) des Werkzeugs (3) beim Ausführungsbeispiel nach Fig. 1 und 2 weist an seinen Seitenflächen angrenzend an die Widerlagerfläche (14') zumindest bereichsweise Abschrägungen (25,26) auf, die als Auflauframpen fungieren, wenn ein Werkzeug aus seiner Ansatzstellung in die Betriebsstellung verschwenkt wird und dabei die Rastarretierung zu überwinden hat. Bei der Ausführung nach Fig. 1 und 2 bilden die Rastausnehmungen (19,20) die Auflauframpen an der anderen Seite des Befestigungsteils (8), das aber auch bei der Ausführung nach Fig. 3 und 4 mit lediglich als Auflauframpen dienenden Abschrägungen (27,28) an der Stelle der Rastausnehmungen (19,20) der Ausführung nach Fig. 1 und 2 versehen sein kann.

An seinen beiden, den Seitenschenkeln (11,12) der Tasche (10) zugewandten Seitenflächen ist das Werkzeug (3) im Bereich seines Befestigungsteils (8) mit rippenförmigen Schutzvorsprüngen (29,30) versehen, die die in Betriebsdrehrichtung (5) vorderen Schmalseiten (31,32) der Seitenschenkel zumindest in jenem Bereich abdecken, in dem die Möglichkeit eines Eingriffs in den Boden besteht. Die sich entlang den Schmalseiten erstreckenden Schutzteile (29,30) verhindern Verschleiß an den Taschen (10), wohingegen Verschleiß an den Schutzteilen ohne Bedeutung ist, da die Werkzeuge (3) wegen sonstigen Verschleißes ohnehin von Zeit zu Zeit der Auswechslung bedürfen.

Die Tasche (10) ist ein außerordentlich formstabiles Bauteil, das dem Befestigungsteil (8) des Werkzeugs einen festen Halt vermittelt und hohe Belastungen verformungsfrei aufnehmen kann. In dieser Tasche (10) hat das Werkzeug (3) einen im wesentlichen spielfreien Sitz, den es während aller Betriebsbelastungen beibehält. Für das Auswechseln eines Werkzeugs genügt ein kräftiger Schlag auf dessen der Drehrichtung (5) abgewandte Rückseite, um es in die Ansatzstellung zu überführen und abnehmen zu können. Für die Ausführung eines solchen Schlages bietet sich der neue Zinken an, wohingegen der alte Zinken für einen Schlag auf einen angesetzten neuen Zinken Verwendung finden kann, so daß besondere Hilfswerkzeuge entbehrlich sind.

## Patentansprüche

1. Bodenbearbeitungsmaschine mit einem an einem Maschinengestell um eine Achse (1) drehbar gelagerten, im Bodenbearbeitungsbetrieb angetriebenen Welle (2) und zumindest einem daran abgestützten, im wesentlichen in einer Radialebene abstehenden Werkzeug (3) zur Bodenbearbeitung, insbesondere in Zinkenform, wobei die Welle (2) für eine im Betrieb starre Abstützung jedes Werkzeugs ein gesondertes, mit ihr verschweißtes, in Umfangsrichtung in sich unbewegliches, in Wellennähe mit einem Querzapfen (15) versehenes Halteteil (10) aufweist, mit dem das Werkzeug mit seinem Befestigungsteil (8) fest, jedoch abnehmbar verbunden ist, wobei der Befestigungsteil (8) mit seinem wellenseitigen Ende auf dem Querzapfen (15) aufsetzbar ist, dadurch gekennzeichnet, daß die Befestigung des Werkzeugs (3) am Halteteil (10) und damit an der Welle (2) frei von zusätzlichen Befestigungsmitteln ist, das wellenseitige Ende des Befestigungsteils (8) des Werkzeugs (3) als Haken (16) ausgebildet ist, der in Betriebsstellung des Werkzeugs (3) den Querzapfen (15) auf seiner, der Welle (2) abgewandten Seite umgreift und das Werkzeug (3) gegen Verlagerungen in dessen Längsrichtung sichert, daß das Halteteil (10) zwei Seitenschenkel (11,12), die randseitig bereichsweise mit der Welle (2) verschweißt sind und einen Querschenkel (13) aufweist, der innenseitig eine Anschlagfläche (14) darbietet, die in Eingriff mit einer Widerlagerfläche (14') am Befestigungsteil (8) des mit seinem Haken (16) auf dem Querzapfen (15) aufgesetzten Werkzeugs (3) die Betriebsstellung des letzteren definiert, und daß zwischen dem Halteteil (10) und dem Befestigungsteil (8) des Werkzeugs (3) eine Rastarretierung (17,18,19,20;21,22,23,24) vorgesehen ist, die das Werkzeug (3) in seiner Betriebsstellung fixiert, wobei die randseitig mit der Welle (2) unverbundenen Bereiche der Seitenschenkel (11,12) des Werkzeugs (3) aus einer Ansatzstellung beim Übergang in die Betriebsstellung eine federelastisch Aufspreizstellung einnehmen.

2. Bodenbearbeitungsmaschine nach Anspruch 1, dadurch gekennzeichnet, daß der Haken (16) in der Ansatzstellung auf den Querzapfen (15) aufsetzbar und von diesem abnehmbar ist, und das Werkzeug (3) aus seiner Ansatzstellung, in der es eine gegenüber der Betriebsstellung entgegen der Betriebsdrehrichtung (5) der Welle (2) voreilend verschwenkte Ausrichtung aufweist, um den Querzapfen (15) in die Betriebsstellung klappbar ist.

3. Bodenbearbeitungsmaschine nach Anspruch 2, dadurch gekennzeichnet, daß der Schwenkwinkel zwischen der Ansatz- und Betriebsstellung des Werkzeugs (3) einen Betrag von etwa 30° bis 60° hat.

4. Bodenbearbeitungsmaschine nach einem der Ansprüche 1 bis 3, dadurch gekennzeichnet, daß die Rastarretierung in Querrichtung zum Werkzeug (3) vorspringende Rastvorsprünge (17,18;23,24) und diesen in Betriebsstellung gegenüberliegende, in Querrichtung zurückspringende Rastausnehmungen (19,20;21,22) umfaßt, die in Betriebsstellung des Werkzeugs (3) paarweise in Rasteingriff stehen.

5. Bodenbearbeitungsmaschine nach Anspruch 4, dadurch gekennzeichnet, daß die Rastvorsprünge (17,18) an den dem Befestigungsteil (8) zugewandten Innenseiten der federelastisch aufspreizbaren Bereiche der Seitenschenkel (11,12) des Halteteils (10) angeordnet sind und in Rastausnehmungen (19,20) in den Seitenflächen des Befestigungsteils (8) des Werkzeugs (3) eingreifen.

6. Bodenbearbeitungsmaschine nach Anspruch 4, dadurch gekennzeichnet, daß die Rastausnehmungen (21,22) an den Innenseiten der federelastisch aufspreizbaren Bereiche der Seitenschenkel (11,12) des Halteteils (10) und die Rastvorsprünge (23,24) an den Seitenflächen des Befestigungsteils (8) des Werkzeugs (3) vorgesehen sind.

7. Bodenbearbeitungsmaschine nach einem der Ansprüche 4 bis 6, dadurch gekennzeichnet, die Rastvorsprünge (17,18;23,24) und/oder die Rastausnehmungen (19,20;21,22) randseitige Abschrägungen als Auflauframpen aufweisen.

8. Bodenbearbeitungsmaschine nach einem der Ansprüche 4 bis 7, dadurch gekennzeichnet, daß der Befestigungsteil (8) an seinen Seitenflächen und angrenzend an die Widerlagerfläche (14') zumindest bereichsweise mit Auflauframpen bildenden Abschrägungen (25,26) versehen ist.

9. Bodenbearbeitungsmaschine nach einem der Ansprüche 4 bis 8, dadurch gekennzeichnet, daß die Rastvorsprünge (17,18;23,24) von ausgeprägten Sicken, angeformten Nocken oder angesetzten Rastgliedern, wie Schraubenbolzenenden, Nietenköpfen oder dergleichen, gebildet sind.

10. Bodenbearbeitungsmaschine nach einem der Ansprüche 4 bis 9, dadurch gekennzeichnet, daß die Rastausnehmungen (19,20) von in Längsrichtung des Werkzeugs (3) verlaufenden Abschrägungen von Seitenflächenbereichen entlang der die Widerlagerfläche (14') abgewandten Vorderfläche (14'') des Befestigungsteils (8) gebildet sind.

11. Bodenbearbeitungsmaschine nach einem der Ansprüche 4 bis 9, dadurch gekennzeichnet, daß die Rastausnehmungen (19,20) von in der Längsrichtung des Werkzeugs (3) ausgerichteten Nuten oder Rillen in den Innenflächen der Seitenschenkel (11,12) des Halteteils (10) gebildet sind.

12. Bodenbearbeitungsmaschine nach einem der Ansprüche 4 bis 9, dadurch gekennzeichnet, daß die Rastausnehmungen (19,20;21,22) von im Umriß an die Rastvorsprünge (17,18;23,24) angepaßten Einsenkungen gebildet sind.

13. Bodenbearbeitungsmaschine nach einem der Ansprüche 4 bis 9, dadurch gekennzeichnet, daß die Rastausnehmungen (19,20;21,22) von Querbohrungen gebildet sind.

14. Bodenbearbeitungsmaschine nach einem der Ansprüche 1 bis 13, dadurch gekennzeichnet, daß die Rastarretierungsstellen im vorderen Bereich des Halteteils (10) und in der unteren Hälfte des Befestigungsteils (8) des Werkzeugs (3) oder unmittelbar unter dem Werkzeug (3) angeordnet sind.

15. Bodenbearbeitungsmaschine nach einem der Ansprüche 1 bis 14, dadurch gekennzeichnet, daß das Werkzeug (3) an seinen den Seitenschenkeln (11,12) des Halteteils (10) zugewandten Seitenflächen mit einem vorspringenden Schutzteil (29,30) versehen ist, das zum Schutz der Rastarretierung, die in Betriebsdrehrichtung (5) weisende Schmalseite (31,32) der Seitenschenkel (11,12) zumindest bereichsweise abdeckt.

16. Bodenbearbeitungsmaschine nach Anspruch 15, dadurch gekennzeichnet, daß die Schutzteile (29,30) als vorspringend angeformte Rippen ausgebildet sind, die entlang der Kontur der Schmalseiten (31,32) verlaufen.

## Claims

1. Soil preparation machine with a shaft (2) held in a machine frame and rotating around an axle (1), which is driven during soil preparation operations, with at least one tool (3) for working the soil fixed to it, which is principally at some distance from it in a radial plane, especially in the form of a prong, whereby the shaft (2) has a separate retaining section (10) welded to it, which contains a cross pin (15) close to the shaft and which is stationary at the circumference for rigid support of any tool being used, as a result of which the tool is firmly, but not permanently, connected by its locking part (8), when the locking part (8) at the shaft end is placed onto the cross pin (15), distinguished by the fact that the tool (3) is held in the retaining section (10) and therefore on the shaft (2) without any other means of fastening, the shaft end of the locking part (8) of the tool (3) being in the shape of a hook (16), which in the working position of the tool (3) grips the cross pin (15) on its end facing the shaft (2) and the tool (3) is prevented from moving in a lengthwise direction, and also by the fact the retaining section (10) has two side shanks (11,12) which are welded at the edges in places to the shaft (2) and one cross shank (13) which forms a locking face (14) on the inside which, by gripping a counterface (14') of the locking part (8) of the tool (3), fixed by its hook (16) on the cross pin (15), defines the working position of the tool and finally by the fact that a clasp locking mechanism (17,18,19,20; 21,22,23,24) is provided between the locking part (8) of the tool (3) which fixes the tool (3) in its working position, whereby the parts of the side shanks (11,12) of the tool (3) not welded at the edges with the shaft (2) assume an elastic sprung-open position when changing from the tool-attaching position to the working position.

2. Soil preparation machine as detailed in claim 1, distinguished by the fact that the hook (16) can be placed onto the cross pin (15) in the tool-attaching position and can be removed from this, and the tool (3) can be swung up around the cross pin into the working position from the attaching position where it hangs forward, in contrast to the working position, in the working direction of rotation (5) of the shaft (2).

3. Soil preparation machine as detailed in claim 2, distinguished by the fact that the angle of swing between the attaching and working positions of the tool (3) is from approx 30° to 60°.

4. Soil preparation machine as detailed in claims 1 to 3, distinguished by the fact that the clasp locking mechanism includes clasp protrusions (17,18;23,24) projecting in a transverse direction to the tool (3) and clasp indentations (19,20;21,22) set back in a transverse direction, in the working position being opposite each other, which lock together in pairs when the tool (3) is in the working position.

5. Soil preparation machine as detailed in claim 4, distinguished by the fact that the clasp protrusions (17,18) are positioned on the inner sides, facing the locking part (8), of the elastic sprung-open parts of the side shanks (11,12) of the retaining section (10) and lock into the clasp indentations (19,20) made in the sides of the locking part (8) of the tool (3).

6. Soil preparation machine as detailed in claim 4, distinguished by the fact that clasp indentations (21,22) are provided on the inner faces of the elastic sprung-open parts of the side shanks (11,12) of the retaining section (10) and clasp protrusions (23,24) are provided on the sides of the locking part (8) of the tool (3).

7. Soil preparation machine as detailed in one of claims 4 to 6, distinguished by the fact that the clasp protrusions (17,18;23,24) and/or the clasp indentations (19,20;21,22) have sloping edges as slip ramps.

8. Soil preparation machine as detailed in one of claims 4 to 7, distinguished by the fact that the locking part (8) is provided at least in places with sloping edges (25,26), forming slip ramps on its sides and adjoining the counterface (14').

9. Soil preparation machines as detailed in one of claims 4 to 8, distinguished by the fact that the clasp protrusions (17,18;23,24) are formed by embossed flutes, moulded-on ridges or projecting pieces such as bolt ends, rivet heads or similar.

10. Soil preparation machines as detailed in one of claims 4 to 9, distinguished by the fact that the clasp indentations (19,20) are formed by sloping side faces running in the lengthwise direction of the tool (3) along the front end (14'') of the locking part (8) facing away from the counterface (14').

11. Soil preparation machine as detailed in one of claims 4 to 9, distinguished by the fact that the clasp indentations (19,20) are formed by grooves or flutes in the inner faces of the side shanks (11,12) of retaining section (10), running lengthwise along the tool (3).

12. Soil preparation machine as detailed in one of claims 4 to 9, distinguished by the fact that the clasp indentations (19,20;21,22) are formed by depressions in the overall outline matching the clasp protrusions (17,18;23,24).

13. Soil preparation machine as detailed in one of claims 4 to 9, distinguished by the fact that the clasp indentations (19,20;21,22) are formed by holes drilled transversally.

14. Soil preparation machine as detailed in one of claims 1 to 13, distinguished by the fact that the clasp locking mechanism points are positioned at the front of the retaining section (10) and in the bottom half of the locking part (8) of the tool (3) or directly below the tool (3).

15. Soil preparation machine as detailed in one of claims 1 to 14, distinguished by the fact that the tool (3) has a projecting protective part (29,30) on its sides facing the side shanks (11,12) of the retaining section (10), which at least all around covers the narrow side (31,32) of the side shanks (11,12) exposed when in the working direction of rotation, to protect the clasp locking mechanism.

16. Soil preparation machine as detailed in claim 15, distinguished by the fact that the protective parts (29,30) are provided as projecting moulded-on fins which follow the contour of the narrow sides. (31,32).

## Revendications

1. Machine pour le travail du sol, comportant un arbre (2) tournant autour d'un axe (1) fixé au châssis de la machine, entraîné en service et portant au moins un outil (3) de travail en appui sur l'arbre, débordant principalement dans un plan radial par rapport au travail du sol et ayant en particulier la forme d'une dent, l'arbre (2) étant équipé, pour fournir un appui rigide en service à chaque outil, d'un support (10) soudé à l'arbre, immobile radialement et muni, pris de l'arbre, d'un pivot transversal (15) assurant une liaison rigide, mais amovible avec une zone de fixation (8) de l'outil et qui peut être, à son extrémité près de l'arbre, séparée du pivot transversal (15), caractérisée en ce que:
- la fixation de l'outil (3) sur le support (10) et par conséquent sur l'arbre (2) est obtenue sans moyens de fixation complémentaires, l'outil, dans sa zone de fixation (8), du côté de l'arbre, ayant la forme d'un crochet (16) qui, lorsque l'outil (3) est en position de service, est en prise avec la face du pivot transversal (8) opposée à l'arbre, et assure ainsi l'outil (3) contre tout déplacement selon sa direction longitudinale,
- le support (10) comporte deux ailes latérales (11,12), soudées localement par leurs bords à l'arbre (2), encadrant une branche transversale (13) dont la face interne constitue une portée de butée (14) qui définit, en servant d'appui à une contrepartie (14') appartenant à la zone de fixation (8) de l'outil lorsque celui-ci est monté par son crochet (16) sur le pivot transversal (15), la position de travail de cet outil,
- entre le support (10) et la zone de fixation (8) de l'outil (3) est prévu un dispositif d'arrêt (17,18,19,20;21,22,23,24), immobilisant l'outil dans sa position de travail,
- les parties, non reliées latéralement à l'arbre (2), des ailes latérales (11,12) s'écartent élastiquement lorsque l'outil (3) passe de sa position de mise en place à sa position de travail.

2. Machine pour le travail du sol, caractérisée en ce que le crochet (16), en position de mise en place, peut être monté sur le pivot transversal (15), ou dégagé de celui-ci, tandis que l'outil (3), partant de sa position de mise en place dans laquelle il se trouve, par rapport à sa position de travail, incliné dans le sens de rotation (5) de l'arbre (2), peut être amené en position de travail par basculement autour du pivot transversal (15).

3. Machine pour le travail du sol, selon la revendication 2, caractérisée en ce que l'angle de basculement pour faire passer l'outil de sa position de mise en place à sa position de travail est compris entre 30° et 60° environ.

4. Machine pour le travail du sol, selon l'une des revendications 1 à 3, caractérisée en ce que le dispositif d'arrêt comporte des bossages d'arrêt (23,24) débordant transversalement à l'outil et, en correspondance avec eux en position de travail, des évidements (19,20;21,22) creusés transversalement à l'outil, ces éléments correspondants étant en prise d'arrêt deux par deux lorsque l'outil (3) est en position de travail.

5. Machine pour le travail du sol, selon la revendication 4, caractérisée en ce que les bossages d'arrêt (17,18) se trouvent sur les faces internes, en regard de la zone de fixation (8) de l'outil, des parties à écartement élastique des ailes latérales (11,12) du support (10) et viennent en prise avec les évidements d'arrêt (19,20) dans les faces latérales de la zone de fixation (8) de l'outil (3).

6. Machine pour le travail du sol, selon la revendication 4, caractérisée en ce que les évidements d'arrêt (21,22) sont prévus sur les faces internes des parties à écartement élastique des ailes latérales (11,12) du support (10), tandis que les bossages d'arrêt (23,24) sont prévus sur les faces latérales de la zone de fixation (8) de l'outil (3).

7. Machine pour le travail du sol, selon l'une des revendications 4 à 6, caratérisée en ce que les bossages d'arrêt (17,18;23,24) et/ou les évidements d'arrêt (19,20;21,22) présentent, sur leurs bords, des chanfreins constituant des rampes d'accès.

8. Machine pour le travail du sol, selon l'une des revendications 4 à 7, caractérisée en ce que la zone de fixation (8) sur ses faces latérales, en bordure de la surface de contre-appui (14') est au moins localement munie de chanfreins (25,26) formant des rampes d'accès.

9. Machine pour le travail du sol, selon l'une des revendications 4 à 8, caractérisée en ce que les bossages d'arrêt (17,18:23,24) sont constitués de reliefs emboutis, de saillies en forme ou d'autres éléments d'arrêt soudés, tels que des pointes de vis, des têtes de rivets ou organes analogues.

10. Machine pour le travail du sol, selon l'une des revendications 4 à 9, caractérisée en ce que les évidements d'arrêt (19,20) sont constitués par des chanfreins pratiqués selon la direction longitudinale de l'outil, sur les zones des faces latérales, le long de la face antérieure (14'') de la zone de fixation (8) de l'outil située à l'opposé de la face de contre-appui (14').

11. Machine pour le travail du sol, selon l'une des revendications 4 à 9, caractérisée en ce que les évidements d'arrêt (19,20) sont constitués par des encoches ou des rainures, orientées selon la direction longitudinale de l'outil (3), et pratiquées sur les faces internes des ailes latérales (11,12) du support (10).

12. Machine pour le travail du sol, selon l'une des revendications 4 à 9, caractérisée en ce que les évidements d'arrêt (19,20;21,22) sont constitués par des enfoncements réalisés en concordance avec les contours des bossages d'arrêt (17,18;23,24).

13. Machine pour le travail du sol, selon l'une des revendications 4 à 9, caractérisée en ce que les évidements d'arrêt (19,20;21,22) sont constitués par des perçages transversaux.

14. Machine pour le travail du sol, selon l'une des revendications 1 à 13, caractérisée en ce que les organes d'arrêt sont situés dans la partie avant de support (10) et dans la moitié inférieure de la zone de fixation (8) de l'outil (3), ou directement sous l'outil (3).

15. Machine pour le travail du sol, selon l'une des revendications 1 à 14, caractérisée en ce que l'outil (3) est muni, sur chacune de ses faces latérales en regard des ailes latérales (11,12) du support, d'une pièce de protection (29,30) débordante qui, pour protéger le dispositif d'arrêt, recouvre au moins localement les côtés étroits (31,32) que présentent les ailes latérales (11,12) dans le sens de rotation (5).

16. Machine pour le travail du so, selon la revendication 15, caractérisée en ce que les pièces de protection (29,30) sont constituées de nervures débordantes, courant le long du bord des côtés étroits (31,32).
